# EUROPÄISCHE PATENTSCHRIFT

(11) **EP 3 219 426 B1**
(45) Veröffentlichungstag und Bekanntmachung des Hinweises auf die Patenterteilung: **29.09.2021**
(21) Anmeldenummer: 17160670.0
(22) Anmeldetag: 13.03.2017
(51) Int. Cl.: B23D 59/00, B27B 5/065, B27G 21/00

(54) **PLATTENBEARBEITUNGSANLAGE SOWIE VERFAHREN ZUM AUFTEILEN VON MINDESTENS EINEM WERKSTÜCK MIT EINER PLATTENBEARBEITUNGSANLAGE**
BOARD TREATMENT DEVICE AND METHOD FOR DIVIDING AT LEAST ONE WORKPIECE HAVING A BOARD PROCESSING DEVICE
INSTALLATION D'USINAGE DE PLAQUE ET PROCÉDÉ DE DÉCOUPE D'AU MOINS UNE PIÈCE USINÉE AU MOYEN DE L'INSTALLATION D'USINAGE DE PLAQUE

(30) Priorität: 14.03.2016 DE 102016104663
(43) Veröffentlichungstag der Anmeldung: 20.09.2017
(73) Patentinhaber: HOMAG Plattenaufteiltechnik GmbH, 75365 Calw (DE)
(72) Erfinder: Friebolin, Manuel, 75365 Calw (DE)
(74) Vertreter: DREISS Patentanwälte PartG mbB

(56) Entgegenhaltungen:
- DE-A1-102014 204 695
- DE-U1-202010 012 085
- DE-U1-202011 101 666
- US-B2- 6 886 462

## Beschreibung

Die Erfindung betrifft eine Plattenbearbeitungsanlage sowie ein Verfahren zum Aufteilen von mindestens einem Werkstück mit einer Plattenbearbeitungsanlage nach den Oberbegriffen der nebengeordneten Patentansprüche 1 und 12.

Plattenbearbeitungsanlagen in Form von Plattenaufteilsägen sind vom Markt her bekannt. Sie dienen zum Aufteilen von großformatigen Werkstücken beispielsweise zur Herstellung von Möbelteilen. Eine Vorschubeinrichtung, meist ein Programmschieber, schiebt ein Werkstück oder einen Stapel von Werkstücken von einem als Rollentisch ausgebildeten Zuführtisch zu einer Aufteileinrichtung, beispielsweise einer Unterflur-Kreissäge. Nach dem Abtrennen eines Teilwerkstücks gelangt dieses auf einen Entnahmetisch, beispielsweise einen Luftkissentisch, von wo es von einer Bedienperson entweder entnommen werden kann, oder wo es von einer Bedienperson beispielsweise gedreht und über die Aufteileinrichtung hinweg wieder der Vorschubeinrichtung zugeführt werden kann.

Die DE 10 2014 204 695 A1 offenbart eine Plattenbearbeitungsanlage gemäß dem Oberbegriff des Patentanspruchs 1. Die DE 10 2008 014 869 A1 offenbart eine Plattenbearbeitungsanlage, bei der mittels eines Laserprojektors Text und Symbole auf ein Werkstück projiziert werden können. Die DE 20 2011 101 666 U1 beschreibt eine Plattenbearbeitungsanlage mit einer Steuereinrichtung und einer mit dieser signaltechnisch gekoppelten Lichtsignaleinrichtung, welche an einem der Bedienperson zugewandten Bereich eines Druckbalkens angeordnet ist. Die Lichtsignaleinrichtung umfasst eine Vielzahl von LEDs. Durch eine entsprechende Ansteuerung der LEDs kann der Bedienperson ein Bereich angezeigt werden, in dem ein Werkstück oberhalb der Aufteileinrichtung platziert werden soll. Auch kann die aktuelle Position eines zu der Aufteileinrichtung gehörenden Sägeaggregats angezeigt werden.

Hiervon ausgehend ist es die Aufgabe der vorliegenden Erfindung, eine Plattenbearbeitungsanlage zu schaffen, die von einer Bedienperson besonders einfach und daher schnell und effizient bedient werden kann.

Diese Aufgabe wird durch eine Plattenbearbeitungsanlage mit den Merkmalen des Anspruchs 1 sowie ein Verfahren mit den Merkmalen des nebengeordneten Patentanspruchs 12 gelöst.

Vorteilhafte Weiterbildungen der Erfindung sind in Unteransprüchen angegeben. Ferner finden sich für die Erfindung wichtige Merkmale in der nachfolgenden Beschreibung und in der Zeichnung. Diese Merkmale können dabei in ganz unterschiedlichen Kombinationen oder auch in Alleinstellung für die Erfindung wichtig sein.

Ein Kern der im Anspruch 1 beanspruchten Erfindung ist die Interaktion der Lichtsignaleinrichtung mit dem tatsächlichen erfassten Status des Werkstücks und/oder mit dem tatsächlichen erfassten Status der Bedienperson. Die Signale, welche die Lichtsignaleinrichtung an die Bedienperson sendet, und die mit diesen Signalen verknüpften Informationen beruhen somit auf einem tatsächlichen erfassten Status und nicht nur auf einem gemäß einem früher programmierten Ablauf gewünschten Status. Die Plattenbearbeitungsanlage "spricht" quasi mit der Bedienperson bzw. "antwortet" der Bedienperson abhängig davon, was die Bedienperson gerade macht und/oder abhängig davon, wie das aktuelle tatsächliche Werkstück aussieht, positioniert ist, etc.

Auf diese Weise kann die Plattenbearbeitungsanlage sehr effizient betrieben werden. Es wird auch die Sicherheit der Bedienperson erhöht, und es kann der Betrieb der Plattenbearbeitungsanlage an die Fähigkeiten der Bedienperson angepasst werden. Dabei wird unter dem Begriff der "Lichtsignaleinrichtung" im Zusammenhang mit der vorliegenden Erfindung keine Einrichtung verstanden, mit der Text oder Bilder oder Symbole wiedergegeben werden- wie beispielsweise bei einem üblichen Bildschirm einer Anlagensteuerung oder bei einem Projektor, der wie bei der DE 10 2008 014 869 A1 entsprechende Informationen auf ein Werkstück projiziert - und die insoweit maßgebliche kognitive Fähigkeiten seitens der Bedienperson erfordert. Stattdessen wird unter einer "Lichtsignaleinrichtung" eine Einrichtung verstanden, die in unmittelbarer optischer Verbindung zu den Augen der Bedienperson steht oder zumindest stehen kann, die vorzugsweise unmittelbar benachbart zu dem Ort und/oder Bereich, in dem eine Handhabung durch die Bedienperson erfolgt bzw. erfolgen soll, angeordnet ist, und die - und dies ist der wesentliche Punkt - lediglich ein beispielsweise durch einen bestimmten Leuchtmodus (definiert durch Leuchtfarbe, Leuchtdauer, Leuchtrhythmus, Leuchtfrequenz und/oder Leuchtort) erzeugtes optische Signal und insoweit ein Lichtsignal abgibt, dessen Bedeutung bzw. Informationsgehalt möglichst intuitiv erfassbar oder zumindest einfach erlernbar ist. Beispiele für solche Leuchtmodi bzw. Lichtsignale sind weiter unten angegeben.

Dabei kann es sich bei der Lichtsignaleinrichtung ausschließlich um eine selbstständig bzw. aktiv Licht emittierende Einrichtung handeln. Alternativ kann die Lichtsignaleinrichtung eine aktiv Licht emittierende Einrichtung umfassen, die nicht in unmittelbarer optischer Verbindung zu den Augen der Bedienperson steht, sondern die auf einen das von ihr emittierte Licht reflektierenden Bereich strahlt, der in unmittelbarer optischer Verbindung zu den Augen der Bedienperson steht und der insoweit ebenfalls zu der Lichtsignaleinrichtung gehört. Aber selbst eine mechanische Lichtsignaleinrichtung, ähnlich einem Zugsignal, bei der die abgestrahlte Lichtfarbe oder der zeitliche Rhythmus der abgestrahlten Lichtfarben durch mechanisch verstellbare farblichen Blenden, die vor eine weiße Lichtquelle geschwenkt werden können, erzielt werden kann, oder bei der lediglich eine Signalbake - ohne irgendeine aktiv leuchtende Einrichtung - mechanisch verschwenkt wird, könnte noch als Lichtsignaleinrichtung bezeichnet werden.

Die vorliegende Erfindung ist bei Plattenbearbeitungsanlagen zum Bearbeiten großformatiger Platten für die Herstellung von Möbelteilen, insbesondere bei Plattenaufteilanlagen, die insoweit einen Zuführtisch, einen Entnahmetisch und eine dazwischen angeordnete Bearbeitungseinrichtung aufweisen, besonders vorteilhaft, da hier von der Bedienperson erhebliche manuelle Tätigkeiten interaktiv mit der Plattenbearbeitungsanlage erforderlich sind. Es versteht sich jedoch, dass das Konzept auch bei anderen Plattenbearbeitungsanlagen, die keinen Zuführtisch und/oder keinen Entnahmetisch aufweisen, ebenfalls große Vorteile hat.

Gemäß einer ersten Weiterbildung der Erfindung ist die Eigenschaft des Werkstücks, die von der Erfassungseinrichtung erfasst wird und abhängig von der die Lichtsignaleinrichtung angesteuert wird, mindestens eine aus der folgenden Gruppe: Größe des Werkstücks, Orientierung des Werkstücks, Position des Werkstücks, Identifikator des Werkstücks, Maserung des Werkstücks, Dekor des Werkstücks Bewegungsrichtung des Werkstücks, Bewegungsgeschwindigkeit des Werkstücks.

Somit wird unter dem Begriff der "Eigenschaft" des Werkstücks im Grunde nicht nur das verstanden, was in irgendeiner Art und Weise Position, Bewegung, Lage, und Aussehen des Werkstücks beschreibt, sondern auch das verstanden, was beispielsweise auf dem Identifikator steht, also beispielsweise der Name des Kunden, für den das Werkstück hergestellt wird, besondere Handlungsanweisungen, etc. Dabei ist auch der Begriff des "Identifikators" breit zu verstehen. Typische Identifikatoren sind beispielsweise Klebeetiketten, Beschriftungen auf einer Oberfläche oder an einer Kante des Werkstücks, RFID-Etiketten, Barcodes, und ähnliches. Zum Aussehen des Werkstücks gehört beispielsweise auch, ob von der Erfassungseinrichtung an dem Werkstück Beschädigungen erfasst wurden. Diese angegebene Gruppe von Eigenschaften ermöglicht es, mit der Lichtsignaleinrichtung der Bedienperson Informationen abhängig von praktisch allen vorstellbaren ein Werkstück betreffenden Situationen und Eigenschaften zu signalisieren.

Gemäß einer anderen Weiterbildung ist die Eigenschaft der Handhabung, die von der Erfassungseinrichtung erfasst wird und abhängig von der die Lichtsignaleinrichtung angesteuert wird, mindestens eine aus der folgenden Gruppe: Position der Bedienperson, Position der Hände der Bedienperson, Bewegungsrichtung der Bedienperson, Bewegungsgeschwindigkeit der Bedienperson, Blickrichtung der Bedienperson. Auch gemäß dieser Weiterbildung ist die Eigenschaft der Handhabung im Rahmen der vorliegenden Erfindung breit zu verstehen und umfasst alles, was mit der aktuellen Position, Geschwindigkeit, Lage, etc. der Bedienperson zu tun hat. Zumindest mittelbar gehört zu den Eigenschaften der Handhabung aber auch beispielsweise die Größe der Bedienperson, da durch diese die Position der Hände der Bedienperson, die unmittelbar zur Handhabung erforderlich sind, beeinflusst wird. Diese angegebene Gruppe von Eigenschaften ermöglicht es, mit der Lichtsignaleinrichtung der Bedienperson Informationen abhängig von praktisch allen vorstellbaren und die Bedienperson bzw. deren Handhabung eines Werkstücks betreffenden Situationen zu signalisieren.

Wie bereits oben erwähnt wurde, ist die Lichtsignaleinrichtung eine solche, welche anstelle von Text oder Bildern an die Bedienperson lediglich Leucht-bzw. Lichtsignale übermittelt. Insbesondere kann die Lichtsignaleinrichtung mindestens in einem Leuchtmodus betreibbar sein, der einer aus der folgenden Gruppe ist und dem eine bestimmte Information zugeordnet ist: Lichtsignaleinrichtung leuchtet in einer bestimmten Farbe, beispielsweise rot, grün, gelb und/oder blau, oder in einem bestimmten Muster, beispielsweise gestreift; Lichtsignaleinrichtung leuchtet an einer bestimmten Stelle; Lichtsignaleinrichtung leuchtet kontinuierlich; Lichtsignaleinrichtung leuchtet in einem bestimmten Rhythmus; Lichtsignaleinrichtung blinkt mit einer bestimmten Geschwindigkeit; Lichtsignaleinrichtung ändert die Farbe in einer bestimmten Reihenfolge; Lichtsignaleinrichtung ändert den Leuchtrhythmus in einer bestimmten Reihenfolge; Lichtsignaleinrichtung ändert den Leuchtort. Dies kann sowohl bedeuten, dass die Lichtsignaleinrichtung selbst beweglich ist, beispielsweise schwenkbar und/oder verschiebbar gelagert ist. Es bedeutet aber im Normalfall, dass die Lichtsignaleinrichtung linienartig ausgebildet ist und sich der Ort innerhalb der Lichtsignaleinrichtung, welcher leuchtet, ändert.

Damit erhält man eine Vielzahl unterschiedlicher Signale, so dass entsprechend auch eine Vielzahl unterschiedlicher Informationen übermittelt werden kann. Gleichwohl sind die Lichtsignale leicht erfassbar, und es können Lichtsignale generiert werden, die auch intuitiv verstehbar sind. Blinkt die Lichtsignaleinrichtung beispielsweise in roter Farbe - gegebenenfalls sogar relativ schnell, dürfte dies von der Bedienperson ohne weiteres intuitiv als "Achtung, Problem" oder "Halt, Stopp" verstanden werden. Leuchtet die Lichtsignaleinrichtung dagegen dauerhaft grün, dürfte dies ohne weiteres intuitiv als "alles in Ordnung" verstanden werden. Die Änderung des Leuchtorts kann beispielsweise so gestaltet werden, dass ein "Lauflicht" geschaffen wird, also eine leuchtende Stelle, die sich von einem Ort zu einem anderen Ort bewegt und die auf diese Weise der Bedienperson eine Richtung anzeigt.

Um die Effizienz im Betrieb der Plattenbearbeitungsanlage zu erhöhen, kommt vor allem die Übermittlung der folgenden Informationen durch die Lichtsignaleinrichtung in Frage: ein Ist-Zustand der Plattenbearbeitungsanlage, ein Ist-Zustand des Werkstücks, ein Soll-Zustand des Werkstücks, ein Soll-Zustand der Bedienperson, eine Differenz zwischen einem Ist-Zustand und einem Soll-Zustand des Werkstücks und/oder der Bedienperson.

Noch stärker im Detail kann die Information mindestens eine aus der folgenden Gruppe sein: die Handhabung ist nicht korrekt; die Handhabung ist korrekt; das Werkstück muss von der aktuellen Orientierung in eine bestimmte Richtung gedreht werden; das Werkstück muss von der aktuellen Position an eine bestimmte Stelle bewegt werden; die Bedienperson muss sich von der aktuellen Position an eine bestimmte Stelle bewegen; die Bedienperson muss ihren Körper und/oder ihre Hände von der aktuellen Position wegbewegen; das Werkstück muss entsorgt werden; das Werkstück muss abgestapelt werden; das Werkstück muss zwischengepuffert werden; das Werkstück muss an einer bestimmten Stelle angelegt werden; ein Bearbeitungsvorgang findet gerade statt; ein Bearbeitungsvorgang ist abgeschlossen; das Werkstück befindet sich gerade an einer bestimmten Stelle; das Werkstück ist gerade in einer bestimmten Weise orientiert.

Erfindungsgemäß ist ferner, dass die Lichtsignaleinrichtung linienhaft ausgebildet ist und sich mindestens zum Teil parallel zum Druckbalken erstreckt, insbesondere an einem solchen montiert ist, und/oder sich mindestens zum Teil orthogonal zu dem Druckbalken erstreckt. Ein solcher Druckbalken ist bei praktisch allen Plattenbearbeitungsanlagen oberhalb von der Aufteileinrichtung vorhanden, um das Werkstück während des Aufteilvorgangs zwischen dem Druckbalken und einem Maschinentisch festzulegen. Er weist eine Seite auf, die von der Bedienperson bestens eingesehen werden kann, und zwar von ganz unterschiedlichen Positionen der Bedienperson im Bereich des Entnahmetisches. Durch die linienhafte Ausgestaltung der Lichtsignaleinrichtung und ihre zum Druckbalken parallele Erstreckung können sehr leicht die für die Handhabung der Werkstücke in diesem Bereich erforderlichen Informationen an die Bedienperson übermittelt werden. Beispielsweise kann der Bedienperson signalisiert werden, wo und wie sie ein Werkstück einzuführen hat, was mit einem gerade fertig bearbeiteten Werkstück geschehen soll, etc. Erstreckt sich die Lichtsignaleinrichtung orthogonal zu dem Druckbalken in horizontaler Richtung, können auch solche Informationen der Bedienperson signalisiert werden, welche eine "Handhabung in Tiefenrichtung", also eine Handhabung oder eine Aktion der Bedienperson längs zur Förderrichtung und orthogonal zur Sägerichtung betreffen. Erstreckt sie sich dagegen orthogonal zu dem Druckbalken in vertikaler Richtung, können auch Weisungen für Handhabungen in vertikaler Richtung an die Bedienperson übermittelt werden.

Es versteht sich dabei, dass der Begriff "linienhaft" nicht im streng mathematischen Sinne zu verstehen ist, wonach eine Linie keine Querausdehnung hat. Vielmehr wird hierunter verstanden, dass die Lichtsignaleinrichtung eine im Verhältnis zu ihrer Breite deutlich größere Länge aufweist, also eine längliche bzw. langgestreckte Form beispielsweise in der Art einer Leiste hat.

Eine weitere vorteilhafte Ausgestaltung der erfindungsgemäßen Plattenbearbeitungsanlage zeichnet sich dadurch aus, dass sie ferner ein Winkellineal und/oder einen Puffertisch und/oder einen Abstapelbereich und/oder einen Lagerbereich umfasst und die Lichtsignaleinrichtung an dem Entnahmetisch und/oder dem Winkellineal und/oder an dem Puffertisch und/oder dem Abstapelbereich und/oder dem Lagerbereich angeordnet ist, vorzugsweise in den Entnahmetisch und/oder das Winkellineal und/oder den Puffertisch und/oder den Abstapelbereich und/oder den Lagerbereich integriert ist. Damit können sämtliche Bereiche der Plattenbearbeitungsanlage, an denen die Bedienperson aktiv sein und Werkstücke handhaben kann, mit entsprechenden Lichtsignaleinrichtungen versehen werden, wodurch der Bedienperson beispielsweise deutlich angezeigt werden kann, wenn ein Werkstück am Winkellineal angelegt werden soll, an welcher Stelle ein Werkstück abgestapelt werden soll, ob ein Werkstück in einer Puffereinrichtung zwischengepuffert werden soll, etc.

Möglich wäre es dabei auch, dass die Lichtsignaleinrichtung in die entsprechenden Bereiche der Plattenbearbeitungsanlage integriert ist. Beispielhaft könnte dies beim Entnahmetisch so aussehen, dass in die Fläche des Entnahmetisches bzw. in die Flächen der üblicherweise vorhandenen Segmente des Entnahmetisches eine Vielzahl einzelner Leuchtelemente eingelassen ist, die nach Möglichkeit alle einzeln oder in Gruppen angesteuert werden können. Abhängig von der erfassten Ist-Lage eines Werkstücks werden nun die in den Entnahmetisch eingelassenen Leuchtelemente so angesteuert, dass die Bedienperson weiß, wohin sie das Werkstück bewegen muss. Befindet sich das Werkstück schließlich an der richtigen Stelle, wechseln die in den Entnahmetisch eingelassenen Leuchtelemente beispielsweise auf Grün. Dies ist aber, wie gesagt, nur als Beispiel zu verstehen. Zahlreiche Abwandlungen hiervon sind denkbar.

All dies ist besonders leicht realisierbar, wenn die Lichtsignaleinrichtung LEDs umfasst. Eine mögliche alternative Realisierung der eher einfacheren Art wäre die Verwendung einer Lichtsignaleinrichtung ähnlich zu einer Straßenverkehrsampel oder zu einem mechanisch veränderbaren Lichtsignal oder einer mechanisch veränderbaren Signalbake, wie es bzw. sie aus dem Eisenbahnwesen bekannt ist.

Bei der Erfassungseinrichtung kann es sich um eine solche handeln, die eine auf den Arbeitsbereich der Bedienperson gerichtete optische Erfassungseinrichtung, insbesondere eine Kamera, umfasst. Mit entsprechenden Bilderkennungstechnologien kann so eine einfache und zuverlässige, gleichzeitige aber auch sehr detaillierte Erfassung der Eigenschaft des Werkstücks und/oder der Eigenschaft der Handhabung durch die Bedienperson realisiert werden.

Möglich ist aber auch, dass, zusätzlich oder alternativ zu der oben angegebenen optischen Erfassungseinrichtung, die Erfassungseinrichtung induktive Sensoren und/oder Ultraschallsensoren und/oder optische Sensoren umfasst. Diese sind üblicherweise relativ preiswert.

Vorgeschlagen wird auch, dass die Lichtsignaleinrichtung so angesteuert wird, dass in Kombination sowohl eine Anweisung für die Handhabung des Werkstücks als auch eine Anweisung für eine hierzu erforderliche Bewegung der Bedienperson ausgegeben wird. Auf diese Weise wird ein besonders effizienter und sicherer Betrieb der Plattenbearbeitungsanlage ermöglicht.

In den anhängenden Patentansprüchen wird eine Plattenaufteilanlage beansprucht, deren Lichtsignaleinrichtung abhängig von der erfassten Eigenschaft des Werkstücks und/oder der erfassten Eigenschaft der Handhabung angesteuert wird. Grundsätzlich denkbar und insoweit selbstständig beanspruchbar wäre aber auch eine Plattenaufteilanlage, bei der die Lichtsignaleinrichtung mit allen oben erwähnten Ausprägungen auch abhängig lediglich von einem vorprogrammierten Programmablauf einer Anlagensteuerung angesteuert wird, und bei der insoweit auf die oben erwähnte Erfassungseinrichtung verzichtet werden kann. Eine solche Plattenbearbeitungsanlage würde also zumindest im Hinblick auf die Ansteuerung der Lichtsignaleinrichtung nicht "geregelt" sondern lediglich "gesteuert" betrieben werden.

Eine solche lediglich gesteuert betriebene Lichtsignaleinrichtung könnte insbesondere eine der oder alle folgenden Informationen bzw. Anweisungen an eine Bedienperson übermitteln: (a) das soeben bearbeitete (beispielsweise abgetrennte) Werkstück soll als Abfall entsorgt werden; (b) das soeben bearbeitete Werkstück ist ein fertiges Werkstück, welches abgestapelt werden soll; (c) das soeben bearbeitete Werkstück ist ein fertiges Werkstück, welches zunächst zwischengelagert (gepuffert) und danach abgestapelt werden soll; (d) das soeben bearbeitete Werkstück ist ein noch nicht fertig bearbeitetes Werkstück, welches zunächst zwischengelagert und danach wieder der Bearbeitungseinrichtung zugeführt werden soll; (e) das soeben bearbeitete Werkstück ist ein noch nicht fertige bearbeitetes Werkstück, welches zunächst um 90° gedreht und dann wieder der Bearbeitungseinrichtung zugeführt werden soll. Grundsätzlich können aber auch viele der bereits oben im Zusammenhang mit einer "geregelt betriebenen" Plattenbearbeitungsanlage erwähnten Informationen bzw. Anweisungen an die Bedienperson übermittelt werden.

Nachfolgend wird die Erfindung beispielhaft unter Bezugnahme auf die beiliegende Zeichnung erläutert. In der Zeichnung zeigen:
- Figur 1: eine perspektivische Darstellung einer Plattenbearbeitungsanlage mit mehreren Lichtsignaleinrichtungen;
- Figur 2: ein Blockschaltbild der Plattenbearbeitungsanlage von Figur 1;
- Figur 3: eine perspektivische Darstellung eines Abstapelwagens einer Plattenbearbeitungsanlage mit mehreren Lichtsignaleinrichtungen; und
- Figur 4: eine perspektivische Darstellung eines Restelagers einer Plattenbearbeitungsanlage mit mehreren Lichtsignaleinrichtungen.

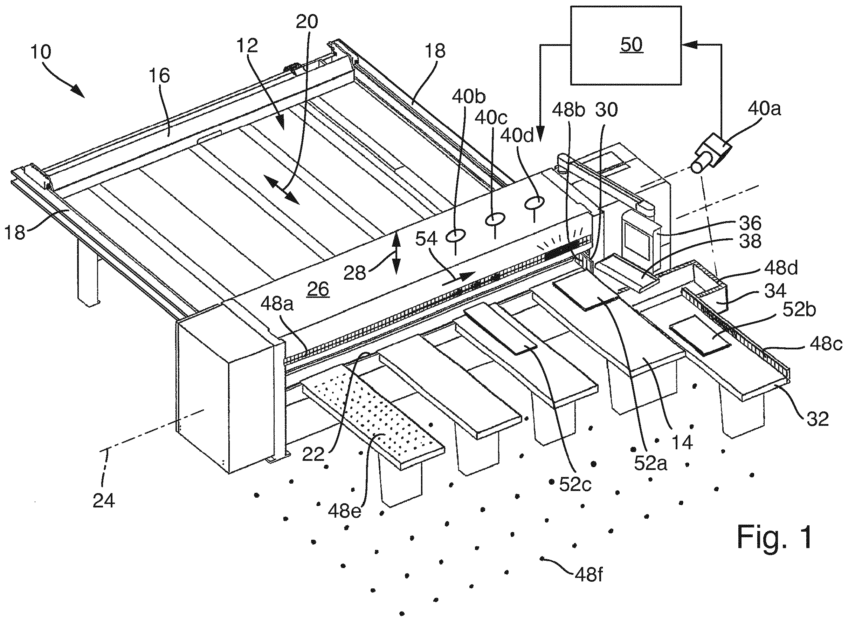

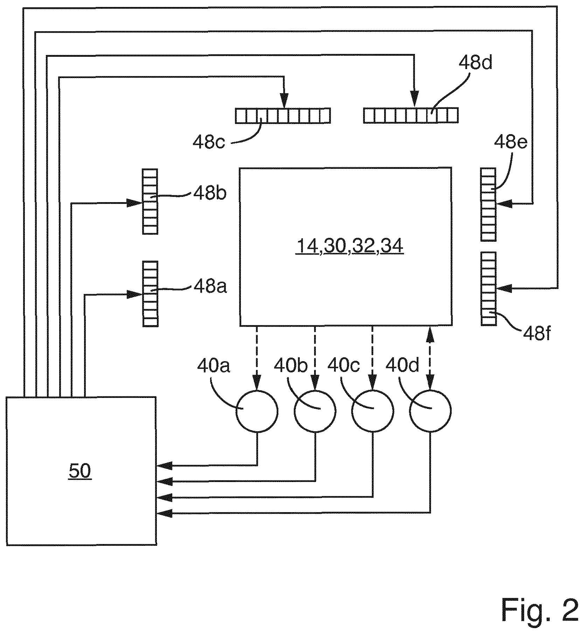

Eine Plattenbearbeitungsanlage trägt in den Figur 1 und 2 insgesamt das Bezugszeichen 10. Sie umfasst einen aus einer Mehrzahl von Rollenschienen bestehenden Zuführtisch 12 und einen insgesamt aus vier einzelnen Segmenten bestehenden Entnahmetisch 14. An Stelle von Rollenschienen kann der Zuführtisch 12 auch als Rollentisch oder als Luftkissentisch ausgeführt werden. Der Entnahmetisch 14 ist üblicherweise als Luftkissentisch ausgeführt, auch hier sind aber andere Ausführungsarten denkbar.

Dem Zuführtisch 12 ist eine Fördereinrichtung in Form eines Programmschiebers 16 zugeordnet. An dem Programmschieber 16 sind mehrere pneumatisch betätigbare Spannzangen (nicht dargestellt) vorhanden, mit denen im Betrieb eine Hinterkante eines Werkstücks oder eines Werkstückstapels gegriffen werden kann. Der Programmschieber 16 ist an zwei seitlichen, den Zuführtisch 12 seitlich begrenzenden Trägern 18 verfahrbar gelagert. Die Verfahrrichtung ist in Figur 1 durch einen Doppelpfeil 20 angedeutet. Die Verfahrrichtung 20 des Programmschiebers 16 wird auch als Förderrichtung bezeichnet. Mit dem Programmschieber 16 können entsprechend dem Doppelpfeil 20 Werkstücke oder Werkstückstapel sowohl in Richtung zum Entnahmetisch 14 hin als auch in einer Richtung vom Entnahmetisch 14 weg bewegt werden.

Zwischen dem Zuführtisch 12 und dem Entnahmetisch 14 ist ein Maschinentisch 22 angeordnet. Zu diesem gehört als Bearbeitungseinrichtung eine Aufteileinrichtung, die in der Figur nicht sichtbar ist, und bei der es sich vorliegend um eine Aufteilsäge mit einer Hauptsäge und einer Vorritzsäge handelt. Bei der vorliegend beispielhaft gezeigten Plattenbearbeitungsanlage 10 handelt es sich also um eine Plattenaufteilanlage bzw. eine Plattenaufteilsäge. Die Aufteilsäge ist auf einem verfahrbaren Sägewagen angeordnet, der in einer Sägerichtung hin und her bewegt werden kann. Diese Sägerichtung ist in Figur 1 durch eine strichpunktierte Linie mit dem Bezugszeichen 24 angedeutet. Es versteht sich, dass anstelle einer Aufteilsäge auch jede andere Art von Bearbeitungseinrichtung oder Aufteileinrichtung eingesetzt werden kann, beispielsweise eine Fräseinrichtung, eine Lasereinrichtung, eine Wasserstrahleinrichtung, eine Luftstrahleinrichtung, etc..

Oberhalb von dem Maschinentisch 22 ist ein Druckbalken 26 vorhanden. Dieser kann in vertikaler Richtung verstellt werden, was durch einen Doppelpfeil 28 angedeutet ist. Es ist allerdings anzumerken, dass von dem Druckbalken 26 in Figur 1 nur ein oberes stationäres Gehäuse sichtbar ist. Der sich tatsächlich in vertikaler Richtung entsprechend dem Doppelpfeil 28 bewegende Abschnitt des Druckbalkens 26 ist von dem Gehäuse verdeckt. Mit dem Druckbalken 26 kann ein Werkstück zwischen dem Druckbalken 26 und dem Maschinentisch 22 festgelegt werden.

In Figur 1 rechts vom Zuführtisch 12 und vom Maschinentisch 22 und von einem kleinen Bereich des äußersten rechten Segments des Entnahmetisches 14 ist ein Winkellineal 30 vorhanden, welches im wesentlichen durch einen lang gestreckten ebenen und geraden vertikalen Metallstreifen gebildet wird. Die Längserstreckung des Winkellineals 30 ist exakt orthogonal zur Längserstreckung der Sägerichtung 24.

Rechts von dem in Figur 1 äußersten rechten Segment des Entnahmetisches 14 sind ferner ein Puffertisch 32 und ein Abfallbehälter 34 angeordnet. Darüber hinaus befindet sich in diesem Bereich ein an einem Tragarm gehaltener Bildschirm 36 mit Tastatur 38.

Weiterhin ist in Figur 1 eine optische Erfassungseinrichtung 40a in Form einer Kamera gezeigt, welche auf jenen Bereich der Plattenbearbeitungsanlage 10 gerichtet ist, in dem sich die Segmente des Entnahmetisches 14, der Puffertisch 32 und der Abfallbehälter 34 befinden, von der aber auch noch jener Teil des Maschinentisches 22 bis zur Sägelinie erfasst werden kann.

Darüber hinaus sind oberhalb vom Druckbalken 26 drei weitere Sensoren symbolisch angedeutet, bei denen es sich um einen induktiven Sensor 40b, einen Ultraschallsensor 40c und einen optischen Sensor 40d handelt. Es versteht sich, dass diese Sensoren nur aus Darstellungsgründen oberhalb vom Druckbalken 26 gezeichnet sind. In der Realität sind diese Sensoren im Bereich des Entnahmetisches 14 und des Maschinentisches 22 sowie an anderen Stellen in der Plattenbearbeitungsanlage 10 angeordnet. Es versteht sich ferner, dass in der Realität eine Vielzahl derartiger Sensoren eingesetzt wird, und nicht nur die drei gezeichneten Sensoren.

An der zu dem Entnahmetisch 14 hin weisenden Seitenwand des Gehäuses des Druckbalkens 26 ist eine linienhaft ausgebildete Lichtsignaleinrichtung 48a anmontiert, die sich parallel zum Druckbalken 26 bzw. parallel zur Sägerichtung 24 erstreckt und mit ein- oder mehrreihig angeordneten Lichtquellen ausgestaltet sein kann. Die hier konkret gezeigte Lichtsignaleinrichtung 48a umfasst eine Vielzahl von LEDs, die nebeneinander in zwei geraden Reihen angeordnet sind, die unmittelbar übereinander angeordnet sind. Dabei können alle LEDs der beiden Reihen einzeln und getrennt angesteuert werden, und die LEDs können Leuchtpunkte in beliebigen Farben erzeugen. Bei anderen Ausführungsformen können auch mehr oder weniger als zwei Reihen von LEDs oder ganz andere Lichtquellen verwendet werden. Eine weitere ähnliche Lichtsignaleinrichtung 48b mit jedoch nur einer Reihe von LEDs ist in den zum Entnahmetisch 14 hin weisenden Abschnitt des Winkellineals 30 integriert. Ferner sind derartige Lichtsignaleinrichtungen 48c und 48d am Rand des Puffertisches 32 und an der Oberkante des Abfallbehälters 34 angeordnet. Die Lichtsignaleinrichtungen 48b und 48c sind ebenfalls linienhaft ausgebildet, erstrecken sich aber orthogonal (horizontal) zum Druckbalken 26 bzw. zur Sägerichtung 24.

Eine weitere Lichtsignaleinrichtung 48e ist in die Segmente des Entnahmetisches 14 integriert. Beispielhaft ist dies für das äußerste linke Segment in Figur 1 gezeichnet. Diese Lichtsignaleinrichtung 48e ist nicht linienhaft, sondern flächig in die Oberseite des Entnahmetisches 14 eingelassen. Bei der gezeigten Ausführungsform besteht sie aus einzelnen LEDs, die jeweils einzeln und getrennt voneinander angesteuert werden können und die Leuchtpunkte in beliebigen Farben erzeugen können.

Eine ähnliche und insoweit flächige Lichtsignaleinrichtung 48f ist in einen Boden integriert, auf dem die Bedienperson während der Handhabung der Werkstücke steht oder sich bewegt.

Es versteht sich, dass bei anderen, nicht gezeigten Ausführungsformen von Plattenbearbeitungsanlagen auch andere Arten von Lichtsignaleinrichtungen als LEDs eingesetzt werden können, beispielsweise übliche Lampen, Lampen mit Blenden und/oder farbigen Gläsern und/oder Lichtleiter. Der Begriff der "Lichtsignaleinrichtung" kann sogar erweitert werden auf andere optisch wahrnehmbare Signaleinrichtungen, also beispielsweise auch mechanische Signaleinrichtungen, wie sie beispielsweise als Zugsignale zur Steuerung des Eisenbahnverkehrs seit langem bekannt sind.

Man erkennt, dass sämtliche Lichtsignaleinrichtungen 48a bis 48f an solchen Stellen der Plattenbearbeitungsanlage 10 angeordnet sind, welche von einer Bedienperson, die sich im Bereich des Entnahmetisches 14 oder des Puffertisches 32 aufhält, direkt eingesehen werden können. Es besteht somit eine direkte optische Verbindung zwischen den Lichtsignaleinrichtungen 48a bis 48f und den Augen der Bedienperson. Lichtsignale, die von den Lichtsignaleinrichtungen 48a bis 48f ausgegeben werden, können somit von der Bedienperson jederzeit und an jeder Position, an der sich die Bedienperson während des normalen Betriebs der Plattenbearbeitungsanlage 10 aufhält, unmittelbar wahrgenommen werden. Man erkennt, dass aufgrund der Ausgestaltung der Lichtsignaleinrichtungen 48a bis 48d in Form von linienhaften LEDs von den Lichtsignaleinrichtungen 48a bis 48d weder Text noch Bilder dargestellt werden können, sondern lediglich Lichtsignale abgegeben werden können, die durch unterschiedliche Betriebsmodi (Leuchtfarbe, Leuchtdauer, und Leuchtort) der Lichtsignaleinrichtungen 48a bis 48d erzeugt werden.

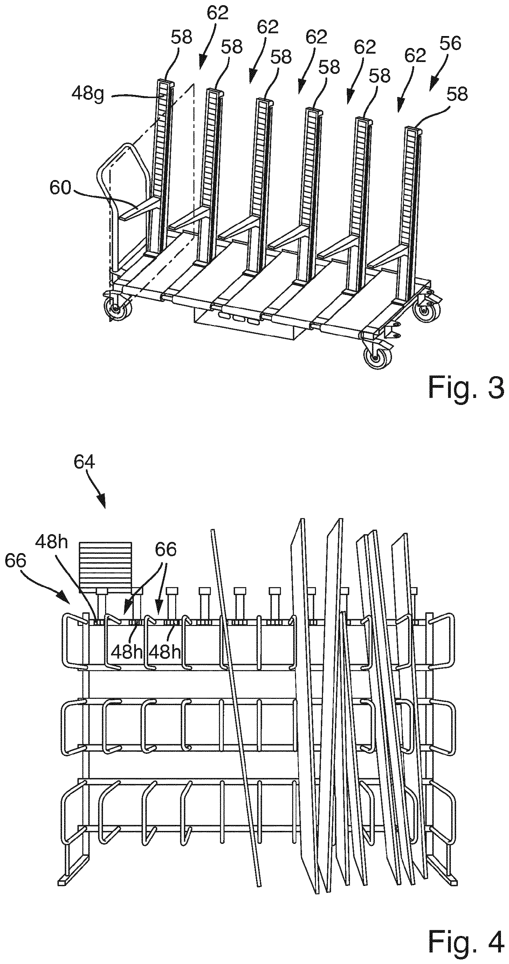

Zu der Plattenbearbeitungsanlage 10 gehört schließlich auch noch eine Steuer- und Regeleinrichtung 50, mit der der Betrieb der Plattenbearbeitungsanlage 10 gesteuert und geregelt werden kann. Die Steuer-und Regeleinrichtung 50 erhält Signale von der optischen Erfassungseinrichtung 40a und den Sensoren 40b-40d, und sie steuert unter anderem die Lichtsignaleinrichtungen 48a-f an. Es versteht sich, dass die Steuer- und Regeleinrichtung 50 auch Signale von vielen anderen Sensoren der Plattenbearbeitungsanlage 10 erhält, noch weitere Lichtsignaleinrichtungen wie in Figur 3 und Figur 4, auf die weiter unten eingegangen werden wird, ansteuern kann und noch andere Teile der Plattenbearbeitungsanlage 10 als die Lichtsignaleinrichtungen 48a-f ansteuert. Beispielsweise werden von der Steuer- und Regeleinrichtung 50 der Programmschieber 16, die Sägeeinrichtung und der Druckbalken 26 angesteuert. Auch die Tastatur 38 und der Bildschirm 36 sind mit der Steuer- und Regeleinrichtung 50 verbunden.

Ganz allgemein arbeitet die Plattenbearbeitungsanlage 10 wie folgt: ein Werkstück, beispielsweise eine großformatige Platte aus Holz oder Kunststoff für die Herstellung von Möbelteilen, oder ein Werkstückstapel wird von den Spannzangen des Programmschiebers 16 gegriffen in Verfahrrichtung 20 dem Maschinentisch 22 bzw. der Sägeeinrichtung zugeführt. Ist das Werkstück richtig positioniert, wird es zwischen Druckbalken 26 und Maschinentisch 22 verklemmt und hierdurch festgelegt. Dann erfolgt der Sägeschnitt.

Danach wird das Werkstück vom Druckbalken 26 wieder freigegeben, und das noch von den Spannzangen gegriffene Restwerkstück wird vom Programmschieber 16 wieder richtig relativ zur Sägerichtung 24 positioniert. Hierdurch wird das abgetrennte Werkstück auf den Entnahmetisch 14 geschoben. Ein solches Werkstück ist in Figur 1 mit dem Bezugszeichen 52a bezeichnet. Dort wird es von einer Bedienperson gehandhabt. "Handhaben" bedeutet hier, dass das Werkstück von der Bedienperson mit den Händen gegriffen und entweder abgestapelt wird (der zugehörige Abstapelplatz ist in Figur 1 nicht gezeichnet, meist handelt es sich um eine Palette oder einen Abstapelwagen 56), oder auf dem Puffertisch 32 oder einem Bereich des Entnahmetisches 14 zwischengelagert wird (Werkstück 52b in Figur 1), um anschließend entweder abgestapelt oder für eine weitere Bearbeitung wieder in Richtung zum Zuführtisch 12 zurückgeschoben zu werden, oder in den Abfallbehälter 34 entsorgt wird, oder in ein Restelager verbracht wird, oder, mit einer gegebenenfalls geänderten Orientierung, wieder in Richtung zum Zuführtisch 12 zurückgeschoben wird, so dass es von einer freien Spannzange gegriffen und auf den Zuführtisch 12 zurückgezogen werden kann, um es dann erneut in Richtung Säge zu bewegen und erneut aufzuteilen.

Zur Optimierung der Handhabung der Werkstücke 52 durch die Bedienperson dienen die Erfassungseinrichtungen 40a-d, die Lichtsignaleinrichtungen 48a-f und die Steuer- und Regeleinrichtung 50. Mittels der Erfassungseinrichtungen 40a-d werden sowohl Eigenschaften der Werkstücke 52 als auch Eigenschaften der Handhabung der Werkstücke 52 durch die Bedienperson erfasst. Insbesondere die Sensoren 40b, 40c und 40d dienen dabei zur Erfassung der Größe der Werkstücke und der Position der Werkstücke 52.

Aber auch die durch die Kamera gebildete optische Erfassungseinrichtung 40a erfasst sowohl die Größe als auch die Position der Werkstücke 52, darüber hinaus aber auch die Orientierung der Werkstücke, also eine Lage der vier Ränder der Werkstücke 52 im Raum, einen Identifikator der Werkstücke 52, eine Maserung der Werkstücke 52, ein Dekor der Werkstücke 52, eine Bewegungsrichtung der Werkstücke 52 und eine Bewegungsgeschwindigkeit der Werkstücke 52.

Unter dem Begriff des "Identifikators" wird vorliegend im einfachsten Fall ein Klebeetikett verstanden, welches auf eine Oberseite eines Werkstücks 52 aufgeklebt ist, und auf das Textinformationen und/oder Symbolinformationen und/oder ein Barcode oder ein Hashcode oder ein sonstiger Code aufgedruckt ist. Ein "Identifikator" kann aber auch ein RFID-Etikett sein, welches einen elektronischen Speicher umfasst, auf dem zu dem Werkstück 52 gehörende Informationen gespeichert sind, und der über einen entsprechenden Sensor, der ebenfalls zu der Erfassungseinrichtung gehört, ausgelesen wird. Auch wird unter einem "Identifikator" jegliche Information verstanden, die unmittelbar auf eine Oberfläche eines Werkstücks 52 aufgebracht ist, beispielsweise in Form eines Barcodes oder eines Symbols. Zu den auf dem Identifikator vorhandene Informationen können Informationen zu einer gewünschten Handhabung des Werkstücks gehören, zum Material des Werkstücks, aber auch Informationen zum Kunden, etc..

Weiterhin erfasst die Kamera 40a Eigenschaften der Handhabung durch die Bedienperson in Form der Position der Bedienperson, der Position der Hände der Bedienperson, der Bewegungsrichtung der Bedienperson und der Bewegungsgeschwindigkeit der Bedienperson.

Die erfassten Eigenschaften werden von den Erfassungseinrichtungen 40a-d der Steuer- und Regeleinrichtung 50 zugeführt und dort verarbeitet. Abhängig vom Ergebnis der Verarbeitung werden dann die Lichtsignaleinrichtungen 48a-f von der Steuer- und Regeleinrichtung 50 angesteuert, so dass diese der Bedienperson ganz bestimmte Informationen und/oder Anweisungen signalisieren können, wie hiernach noch dargelegt werden wird. Dabei wird von der Steuer- und Regeleinrichtung 50 auch der programmierte Ablauf, beispielsweise ein programmiertes Schnittbild bzw. ein programmierter Schnittplan, berücksichtigt. Insbesondere wird von der Steuer-und Regeleinrichtung 50 eine Differenz zwischen einem von den Erfassungseinrichtungen 40a-d erfassten Ist-Zustand und dem von dem programmierten Ablauf vorgegebenen Soll-Zustand ausgewertet, und die Lichtsignaleinrichtungen 48a-f werden entsprechend angesteuert.

Bei der konkret in Figur 1 dargestellten Betriebssituation wurde das Werkstück 52a gerade gesägt. Die oberhalb von dem Werkstück 52a vorhandenen LEDs der Lichtsignaleinrichtung 48a blinken langsam grün oder leuchten dauerhaft grün und signalisieren so der Bedienperson, dass das Werkstück 52a fertig bearbeitet ist und abgestapelt werden kann. Gleichzeitig erkennt man in Figur 1, das auf dem zweiten Segment von rechts des Entnahmetisches 14 ein Werkstück 52c zwischengelagert wurde. Wenn die Bedienperson das Werkstück 52a entnommen hat, wird die Lichtsignaleinrichtung 48a so angesteuert, dass ein "Lauflicht" von einer Position oberhalb von dem Werkstück 52c zum Winkellineal 30 hin läuft (dies ist in Figur 1 durch einen Pfeil 54 symbolisiert), wodurch der Bedienperson signalisiert wird, das Werkstück 52c zu dem in Figur 1 ganz rechten Segment des Entnahmetisches 14 zu bewegen. Dort blinken die LEDs der Lichtsignaleinrichtung 48b am Winkellineal 30 so lange, bis das Werkstück 52c korrekt am Winkellineal 30 anliegt und soweit in Richtung zum Zuführtisch 12 eingeschoben ist, dass es von den Spannzangen des Programmschiebers 16 ergriffen werden kann. Ist dies der Fall, leuchten die LEDs des Winkellineals 30 dauerhaft grün, wodurch der Bedienperson angezeigt wird, dass die Handhabung korrekt war.

Würde die Bedienperson statt des Werkstücks 52c irrtümlich das Werkstück 52a am Winkellineal 30 anlegen und zum Zuführtisch 12 zurückschieben (anstatt es abzustapeln), würde dies von den Erfassungseinrichtungen 40a-d erfasst und der Steuer- und Regeleinrichtung 50 gemeldet werden, worauf diese sowohl die LEDs der Lichtsignaleinrichtung 48b am Winkellineal 30 als auch die oberhalb von dem Werkstück 52c vorhandenen LEDs der Lichtsignaleinrichtung 48a so ansteuern würde, dass diese mit hoher Frequenz rot blinken. Hierdurch würde der Bedienperson signalisiert werden, dass der Ist-Zustand nicht dem Soll-Zustand entspricht und die Handhabung des Werkstücks 52c nicht korrekt ist.

Von der Lichtsignaleinrichtung 48a kann der Bedienperson auch signalisiert werden, dass beispielsweise das Werkstück 52c von der aktuellen Orientierung in eine bestimmte Richtung gedreht werden muss, beispielsweise entgegen dem Uhrzeigersinn, bevor es am Winkellineal 30 angelegt wird. Dies wird vorliegend dadurch signalisiert, dass eine untere Reihe von LEDs der Lichtsignaleinrichtung 48a so angesteuert wird, dass oberhalb von dem zweiten Segment von rechts des Entnahmetisches 14 ein Lauflicht nach rechts geschaffen wird, und anschließend die obere Reihe von LEDs der Lichtsignaleinrichtung 48a so angesteuert wird, dass oberhalb von dem zweiten Segment von rechts des Entnahmetisches 14 ein Lauflicht nach links geschaffen wird.

Mittels der Lichtsignaleinrichtung 48a kann einer Bedienperson signalisiert werden, an welcher Stelle sie ein Werkstück auf den Entnahmetisch 14 auflegen und in Richtung Programmschieber 16 bewegen soll. Die Lichtsignaleinrichtung 48a wird dabei so angesteuert, dass die LEDs oberhalb von der Sollposition leuchten, und zwar derart, dass ein leuchtender Balken mit der Breite des Werkstücks gebildet wird. Dabei leuchten die beiden äußersten LEDs kontinuierlich, wohingegen die mittleren LEDs des Balken blinken. Vorzugsweise wird für dieses Signal die Leuchtfarbe gelb gewählt. Gegebenenfalls kann die Lichtsignaleinrichtung 48a so angesteuert werden, dass die Farbe des leuchtenden Balkens sich von gelb nach grün ändert, wenn das Werkstück richtig eingelegt ist.

Mittels der Lichtsignaleinrichtung 48a kann einer Bedienperson auch signalisiert werden, zwei Werkstücke nebeneinander vom Entnahmetisch 14 in Richtung zum Zuführtisch 12 dem Programmschieber 16 zuzuführen. Hierzu kann einerseits die Bewegung der Werkstücke in die jeweilige Position durch ein entsprechendes Lauflicht signalisiert werden, und es kann andererseits an der Soll-Position des jeweiligen Werkstücks die Werkstückbreite des jeweiligen Werkstücks und die Soll-Position des jeweiligen Werkstücks durch ein Blinken der entsprechenden LEDs der Lichtsignaleinrichtung 48a beispielsweise in gelber Farbe angezeigt werden. Wird erfasst, dass die Bedienperson versucht, ein falsches Werkstück einzulegen, blinken die LEDs der Lichtsignaleinrichtung 48a oberhalb von diesem falschen Werkstück rot.

Soll das auf dem Puffertisch 32 liegende Werkstück 52b wieder zurück zur Säge bewegt werden, wird die Lichtsignaleinrichtung 48c entsprechend mit einem Lauflicht in Richtung zur Säge hin angesteuert. Solange es aber noch auf dem Puffertisch 32 verbleiben soll, leuchten die unmittelbar neben dem Werkstück 52b vorhandenen LEDs dauerhaft grün, wie in Figur 1 dargestellt, oder sind einfach ausgeschaltet.

Während der Ausführung eines Sägeschnittes durch die Sägeeinrichtung blitzen sämtliche LEDs der Lichtsignaleinrichtung 48a kurz in roter Farbe, so dass der Bedienperson zusätzlich signalisiert wird, dass der Druckbalken 26 abgesenkt ist und gerade ein Schnitt stattfindet. Ist der Schneidvorgang beendet, wird dies durch ein kurzes Aufblitzen sämtlicher LEDs der Lichtsignaleinrichtung 48a in grüner Farbe signalisiert.

Befindet sich die Bedienperson beispielsweise zwischen den beiden äußersten rechten Segmenten des Entnahmetisches 14 in unmittelbarer Nähe zum Maschinentisch 22, und sieht der Programmablauf vor, ein gerade abgeschnittenes Werkstück genau in diesen Bereich vorzuschieben, wird der Bedienperson beispielsweise durch zwei von jener Stelle, an der sich die Bedienperson befindet, nach links und rechts außen laufende Lauflichter in gelber Farbe angedeutet, sie möge sich vom Maschinentisch 22 weg bewegen.

Durch die Lichtsignaleinrichtung 48d am Abfallbehälter 34 (oder alternativ oder zusätzlich an einer Abschlagkante) wird der Bedienperson signalisiert, wenn ein bestimmtes Werkstück in den Abfallbehälter 34 entsorgt werden soll. Auch hier kann beispielsweise die Lichtsignaleinrichtung 48d so angesteuert werden, dass dann, wenn die Bedienperson das richtige Werkstück in den Abfallbehälter 34 entsorgt hat, die LEDs der Lichtsignaleinrichtung 48d dauerhaft grün leuchten. Ist dagegen die Bedienperson dabei, dass falsche Werkstück in den Abfallbehälter 34 zu entsorgen, blinken die LEDs der Lichtsignaleinrichtung 48d mit hoher Frequenz rot.

Dabei wird zuvor der Bedienperson das zu entsorgende Werkstück im Bereich des Entnahmetisches 14 dadurch angezeigt, dass sowohl die oberhalb von dem zu entsorgenden Werkstück angeordneten LEDs der Lichtsignaleinrichtung 48a als auch die LEDs der Lichtsignaleinrichtung 48d am Abfallbehälter 34 blau leuchten. Soll das Werkstück dagegen nicht entsorgt sondern auf den Puffertisch 32 bewegt werden, leuchten die oberhalb von dem zu puffernden Werkstück angeordneten LEDs der Lichtsignaleinrichtung 48a und die am Puffertisch 32 vorhandene Lichtsignaleinrichtung 48c gelb oder blau/gelb gestreift.

Auf diese Weise kann der Bedienperson auch signalisiert werden, wenn das Werkstück, beispielsweise das Werkstück 52 a, nicht auf dem Puffertisch 32, sondern auf einem der im linken Bereich vorhandenen Segmente des Entnahmetisches 14 zwischengelagert werden soll. Beispielsweise kann dies durch einen sich vom in Figur 1 rechten äußeren Segment des Entnahmetisches 14 nach links bewegenden "Balken", der durch gelb leuchtende LEDs der Lichtsignaleinrichtung 48a gebildet wird, signalisiert werden.

Die unterschiedlichen Arten der Signalisierung durch die Lichtsignaleinrichtungen 48 werden auch als "Leuchtmodi" bezeichnet. Oben wurden beispielhaft einige mögliche Leuchtmodi beschrieben. Möglich sind grundsätzlich aber auch viele weitere Leuchtmodi, beispielsweise: die Lichtsignaleinrichtung leuchtet in einem bestimmten Rhythmus, blinkt mit einer bestimmten Geschwindigkeit, ändert die Farbe in einer bestimmten Reihenfolge und/oder ändert den Leuchtrhythmus in einer bestimmten Reihenfolge.

Die in den Entnahmetisch 14 integrierte Lichtsignaleinrichtung 48e kann ebenfalls dazu eingesetzt werden, der Bedienperson zu signalisieren, ob ein Werkstück an der richtigen Stelle und in der richtigen Orientierung auf dem Entnahmetisch 14 liegt, oder ob ein auf dem Entnahmetisch 14 liegendes Werkstück an eine andere Position auf dem Entnahmetisch 48b bewegt, es gedreht oder an eine andere Stelle der Plattenbearbeitungsanlage 10 transportiert werden soll. Beispielsweise können die im Bereich der vier Ränder eines Werkstücks angeordneten LEDs so angesteuert werden, dass um das Werkstück herum ein "Rahmen" aus leuchtenden LEDs gebildet wird. Soll das Werkstück gedreht werden, wird der Rahmen aus leuchtenden LEDs gedreht. Soll das Werkstück an eine andere Stelle bewegt werden, wird der Rahmen aus leuchtenden LEDs an diese andere Stelle bewegt, und diese Bewegung wird so lange wiederholt, bis die Bedienperson das Werkstück tatsächlich an die andere Stelle bewegt hat.

Die in den Boden integrierte Lichtsignaleinrichtung 48f kann dazu eingesetzt werden, der Bedienperson zu signalisieren, an welcher Stelle sie sich aufhalten kann oder soll, und an welcher Stelle sie sich gerade nicht aufhalten soll. An jener Stelle, an der die Bedienperson sich aufhalten soll, leuchten die LEDs der Lichtsignaleinrichtung 48f dann beispielsweise dauerhaft grün. Die anderen LEDs leuchten dann dauerhaft rot. Die LEDs längs eines Wegs, den die Bedienperson gehen soll, können beispielsweise grün blinken.

Wie oben erwähnt wurde, wird der Bedienperson durch die Lichtsignaleinrichtung 48a angezeigt, wenn ein Werkstück fertig bearbeitet ist und es abgestapelt werden kann. Als Abstapelplatz können im einfachsten Fall übliche Paletten dienen. Als Abstapelplatz kann aber auch ein zu der Plattenbearbeitungsanlage 10 gehörender Abstapelwagen 56 dienen, wie er in Figur 3 dargestellt ist. Dieser umfasst sechs im Wesentlichen vertikale Trennstützen 58, von denen horizontale Trennstützen 60 abragen, von denen in Figur 3 aus Darstellungsgründen nur eine mit einem Bezugszeichen versehen ist. Auf diese Weise werden zwischen den Trennstützen 58 und 60 insgesamt fünf Abstapelfächer 62 geschaffen, zwischen denen fertig bearbeitete Werkstücke vertikal stehend abgestapelt werden können. Ein Beispiel für ein solches vertikal stehendes Werkstück ist in Figur 3 strichpunktiert angedeutet.

An jeder der vertikalen Trennstützen 58 ist eine Lichtsignaleinrichtung 48g angeordnet, von denen aus Darstellungsgründen wiederum nur eine mit einem Bezugszeichen versehen ist. Die Lichtsignaleinrichtungen 48g sind mit einer Stromversorgung und einer Empfangseinrichtung (nicht dargestellt) verbunden. Die Empfangseinrichtung erhält drahtlos Steuersignale von der Steuer- und Regeleinrichtung 50. Leuchten beispielsweise die Lichtsignaleinrichtungen 48g der beiden äußersten linken Trennstützen 58 grün, wird der Bedienperson hierdurch signalisiert, das Werkstück, das sie gerade handhabt, zwischen diesen beiden Trennstützen 58 in das äußerste linke Abstapelfach 62 abzustapeln. Auch hier kann der Bedienperson durch beispielsweise rotes Blinken der Lichtsignaleinrichtungen 48g signalisiert werden, wenn sie das Werkstück in ein falsches Abstapelfach 62 abstapelt.

Ähnlich verhält es sich mit einem Restelager 64, welches in Figur 4 dargestellt ist. Auch hier werden eine Vielzahl von Lagerfächern 66 gebildet, von denen in Figur 4 wiederum aus Gründen der Übersichtlichkeit nur die äußersten drei linken Lagerfächer mit Bezugszeichen versehen sind und in denen Werkstücke vertikal gelagert werden können. Jedem Lagerfach 66 ist eine Lichtsignaleinrichtung 48h zugeordnet, durch die der Bedienperson jenes Lagerfach 66 signalisiert werden kann, in das die Bedienperson das Werkstück, das sie gerade handhabt, einlagern soll.

Es sei noch darauf hingewiesen, dass die Abstapelplätze 56 farblich gekennzeichnet werden können. Die Lichtsignaleinrichtung gibt in diesem Fall Informationen betreffend das Abstapeln auf einen bestimmten Abstapelplatz 56 durch eine Anzeige einer entsprechenden Farbe bzw. Farbkombination.

## Patentansprüche

1. Plattenbearbeitungsanlage (10), mit einem Zuführtisch (12), einem Entnahmetisch (14), einer zwischen Zuführtisch (12) und Entnahmetisch (14) angeordneten Bearbeitungseinrichtung, mindestens einer Lichtsignaleinrichtung (48), welche an einer von einer Bedienperson einsehbaren Stelle so angeordnet und ausgebildet ist, dass von ihr ausgehendes Licht direkt zu den Augen der Bedienperson gelangen kann, und einer Steuereinrichtung (50) zum Steuern der Lichtsignaleinrichtung (48), wobei die Plattenbearbeitungsanlage (10) eine Erfassungseinrichtung (40) umfasst, welche mindestens eine Eigenschaft eines Werkstücks (52) und/oder einer Handhabung eines Werkstücks (52) durch die Bedienperson erfasst und mit der Steuereinrichtung (50) verbunden ist, welche die Lichtsignaleinrichtung (48) abhängig von der erfassten Eigenschaft des Werkstücks (52) und/oder der erfassten Eigenschaft der Handhabung ansteuert, **dadurch gekennzeichnet, dass** die Lichtsignaleinrichtung (48) linienhaft ausgebildet ist und sich mindestens zum Teil parallel zu einem Druckbalken (26) erstreckt und/oder sich mindestens zum Teil orthogonal zu dem Druckbalken (26) erstreckt.

2. Plattenbearbeitungsanlage (10) nach Anspruch 1, **dadurch gekennzeichnet, dass** die Eigenschaft des Werkstücks (52) mindestens eine aus der folgenden Gruppe ist: Größe des Werkstücks (52), Orientierung des Werkstücks (52), Position des Werkstücks (52), Identifikator des Werkstücks (52), Maserung des Werkstücks (52), Dekor des Werkstücks (52), Bewegungsrichtung des Werkstücks (52), Bewegungsgeschwindigkeit des Werkstücks (52).

3. Plattenbearbeitungsanlage (10) nach Anspruch 1, **dadurch gekennzeichnet, dass** die Eigenschaft der Handhabung mindestens eine aus der folgenden Gruppe ist: Position der Bedienperson, Position der Hände der Bedienperson, Bewegungsrichtung der Bedienperson, Bewegungsgeschwindigkeit der Bedienperson, Blickrichtung der Bedienperson.

4. Plattenbearbeitungsanlage (10) nach einem der vorhergehenden Ansprüche, **dadurch gekennzeichnet, dass** die Lichtsignaleinrichtung (48) mindestens in einem Leuchtmodus betreibbar ist, der einer aus der folgenden Gruppe ist und dem eine bestimmte Information zugeordnet ist: Lichtsignaleinrichtung (48) leuchtet in einer bestimmten Farbe oder in einem bestimmten Muster, beispielsweise gestreift; Lichtsignaleinrichtung (48) leuchtet an einer bestimmten Stelle; Lichtsignaleinrichtung (48) leuchtet kontinuierlich; Lichtsignaleinrichtung (48) leuchtet in einem bestimmten Rhythmus; Lichtsignaleinrichtung (48) blinkt mit einer bestimmten Geschwindigkeit; Lichtsignaleinrichtung (48) ändert die Farbe in einer bestimmten Reihenfolge; Lichtsignaleinrichtung (48) ändert den Leuchtrhythmus in einer bestimmten Reihenfolge; Lichtsignaleinrichtung (48) ändert den Leuchtort.

5. Plattenbearbeitungsanlage (10) nach Anspruch 4, **dadurch gekennzeichnet, dass** die Information mindestens eine aus der folgenden Gruppe ist: ein Ist-Zustand der Plattenbearbeitungsanlage (10), ein Ist-Zustand des Werkstücks (52), ein Soll-Zustand des Werkstücks (52), ein Soll-Zustand der Bedienperson, eine Differenz zwischen einem Ist-Zustand und einem Soll-Zustand des Werkstücks (52) und/oder der Bedienperson.

6. Plattenbearbeitungsanlage (10) nach Anspruch 5, **dadurch gekennzeichnet, dass** die Information mindestens eine aus der folgenden Gruppe ist: die Handhabung ist nicht korrekt; die Handhabung ist korrekt; das Werkstück (52) muss von der aktuellen Orientierung gedreht werden; das Werkstück (52) muss von der aktuellen Position an eine bestimmte Stelle bewegt werden; die Bedienperson muss sich von der aktuellen Position an eine bestimmte Stelle bewegen; die Bedienperson muss ihren Körper und/oder ihre Hände von der aktuellen Position wegbewegen; das Werkstück (52) muss entsorgt werden; das Werkstück (52) muss abgestapelt werden; das Werkstück (52) muss zwischengepuffert werden; das Werkstück (52) muss an einer bestimmten Stelle angelegt werden; ein Bearbeitungsvorgang findet gerade statt; ein Bearbeitungsvorgang ist abgeschlossen; das Werkstück (52) befindet sich gerade an einer bestimmten Stelle; das Werkstück (52) ist gerade in einer bestimmten Weise orientiert.

7. Plattenbearbeitungsanlage (10) nach einem der vorhergehenden Ansprüche, **dadurch gekennzeichnet, dass** sie ferner ein Winkellineal (30) und/oder einen Puffertisch (32) und/oder einen Abstapelbereich (56) und/oder einen Lagerbereich (64) umfasst und die Lichtsignaleinrichtung (48) an dem Entnahmetisch (14) und/oder dem Winkellineal (30) und/oder an dem Puffertisch (32) und/oder dem Abstapelbereich (56) und/oder dem Lagerbereich (64) angeordnet ist, vorzugsweise in den Entnahmetisch (14) und/oder das Winkellineal (30) und/oder den Puffertisch und/oder den Abstapelbereich und/oder den Lagerbereich und/oder in einen Boden, auf dem sich die Bedienperson bewegt, integriert ist.

8. Plattenbearbeitungsanlage (10) nach einem der vorhergehenden Ansprüche, **dadurch gekennzeichnet, dass** die Lichtsignaleinrichtung (48) LEDs umfasst, die vorzugsweise in mindestens einer Reihe oder in mehreren Reihen angeordnet sind.

9. Plattenbearbeitungsanlage (10) nach einem der vorhergehenden Ansprüche, **dadurch gekennzeichnet, dass** die Erfassungseinrichtung eine auf den Arbeitsbereich der Bedienperson gerichtete optische Erfassungseinrichtung, insbesondere eine Kamera (40a), umfasst.

10. Plattenbearbeitungsanlage (10) nach einem der vorhergehenden Ansprüche, **dadurch gekennzeichnet, dass** die Erfassungseinrichtung mindestens einen induktiven Sensor (40b) und/oder mindestens einen Ultraschallsensor (40c) und/oder mindestens einen optischen Sensor (40d) umfasst.

11. Plattenbearbeitungsanlage (10) nach einem der vorhergehenden Ansprüche, **dadurch gekennzeichnet, dass** die Lichtsignaleinrichtung (48) so angesteuert wird, dass sowohl eine Anweisung für die Handhabung des Werkstücks als auch eine Anweisung für eine hierzu erforderliche Bewegung der Bedienperson ausgegeben wird.

12. Verfahren zum Aufteilen von mindestens einem Werkstück (52) mit einer Plattenbearbeitungsanlage (10) nach einem der vorhergehenden Ansprüche umfassend:
- Erfassen mindestens einer Eigenschaft des mindestens einen Werkstücks (52) und/oder einer Handhabung des mindestens einen Werkstücks (52) durch die Bedienperson vor einem Aufteilvorgang, während eines Aufteilvorgangs und/oder nach einem Aufteilvorgang, und
- Ansteuern einer Lichtsignaleinrichtung (48), welche auf einer von einer Bedienperson einsehbaren Stelle an der Plattenbearbeitungsanlage (10) angeordnet ist, in Abhängigkeit von der erfassten Eigenschaft des mindestens einen Werkstücks (52) und/oder der Handhabung, wobei die Lichtsignaleinrichtung (48) linienhaft ausgebildet ist und sich mindestens zum Teil parallel zu einem Druckbalken (26) erstreckt und/oder sich mindestens zum Teil orthogonal zu dem Druckbalken (26) erstreckt.

## Claims

1. Panel processing apparatus (10) with a feeding table (12), a removal table (14), a processing device arranged between the feeding table (12) and the removal table (14), at least one light signaling device (48) which is arranged at a position which can be seen by an operator and is configured such that the light emitted by the device can reach directly the eyes of the operator, and a controller (50) for controlling the light signaling device (48), wherein the panel processing apparatus (10) comprises a detecting device (40) which detects at least one property of a workpiece (52) and/or of a handling of the workpiece (52) by the operator and which is connected to the controller (50) which drives the light signaling device (48) depending on the detected property of the workpiece (52) and/or the detected property of handling, **characterized in that** the light signaling device (48) is configured as a line and extends at least partially parallel to a pressure beam (26) and/or extends at least partially orthogonally to the pressure beam (26).

2. Panel processing apparatus (10) as claimed in claim 1, **characterized in that** the property of the workpiece (52) is at least one from the following group: size of the workpiece (52), orientation of the workpiece (52), position of the workpiece (52), identifier of the workpiece (52), grain of the workpiece (52), decor of the workpiece (52), moving direction of the workpiece (52), moving speed of the workpiece (52).

3. Panel processing apparatus (10) as claimed in claim 1, **characterized in that** the property of handling is at least one from the following group: position of the operator, position of the hands of the operator, moving direction of the operator, moving speed of the operator, direction of view of the operator.

4. Panel processing apparatus (10) as claimed in one of the preceding claims, **characterized in that** the light signaling device (48) can be operated in at least one lighting mode which is one from the following group and which is associated with a certain information: light signaling device (48) gives light in a certain color or in a certain pattern, for example in stripes; light signaling device (48) gives light at a certain place; light signaling device (48) gives light continuously; light signaling device (48) gives light in a certain rhythm; light signaling device (48) flashes at a certain speed; light signaling device (48) changes color in a certain order; light signaling device (48) changes the lighting rhythm in a certain order; light signaling device (48) changes that place of lighting.

5. Panel processing apparatus (10) as claimed in claim 4, **characterized in that** the information is at least one from the following group: an actual state of the panel processing apparatus (10), an actual state of the workpiece (52), a desired state of the workpiece (52), a desired state of the operator, a difference between an actual state and a desired state of the workpiece (52) and/or of the operator.

6. Panel processing apparatus (10) as claimed in claim 5, **characterized in that** the information is at least one from the following group: handling is not correct; handling is correct; the workpiece (52) has to be rotated from the present orientation; the workpiece (52) has to be moved from the present position to a certain place; the operator has to move from the present position to a certain place; the operator has to move his body and/or his hands from the present position; the workpiece (52) has to be disposed of; the workpiece (52) has to be destacked; the workpiece (52) has to be buffered; the workpiece (52) has to be put on at a certain place; a working process is just being performed; a working process is finished; the workpiece (52) is just at a certain place; the workpiece (52) is just orientated in a certain way.

7. Panel processing apparatus (10) as claimed in one of the preceding claims, **characterized in that** it further comprises an angle ruler (30) and/or a buffer table (32) and/or a destacking area (56) and/or a storage area (64) and the light signaling device (48) is arranged at the removal table (14) and/or at the angle ruler (30) and/or at the buffer table (32) and/or at the destacking area (56) and/or at the storage area (64), preferably being integrated into the removal table (14) and/or into the angle ruler (30) and/or into the buffer table (32) and/or into the destacking area (56) and/or into the storage area (64) and/or into a floor on which the operator moves.

8. Panel processing apparatus (10) as claimed in one of the preceding claims, **characterized in that** the light signaling device (48) comprises LEDs which are arranged preferably in at least one row or in several rows.

9. Panel processing apparatus (10) as claimed in one of the preceding claims, **characterized in that** the detecting device comprises an optical detecting device directed to the working area of the operator, in particular a camera (40a).

10. Panel processing apparatus (10) as claimed in one of the preceding claims, **characterized in that** the detecting device comprises at least one inductive sensor (40b) and/or at least one supersonic sensor (40c) and/or at least one optical sensor (40d) .

11. Panel processing apparatus (10) as claimed in one of the preceding claims, **characterized in that** the light signaling device (48) is controlled in such a way that both an instruction for handling the workpiece as well as a movement of the operator required therefore is output.

12. Method for dividing at least one workpiece (52) with a panel processing apparatus (10) as claimed in one of the preceding claims, comprising:
- detecting at least one property of the at least one workpiece (52) and/or of one handling of the at least one workpiece (52) by the operator before a dividing process, during a dividing process and/or after a dividing process and
- controlling a light signaling device (48), which is arranged in a place on the panel processing apparatus (10) which can be seen by that operator, depending on the detected property of the at least one workpiece (52) and/or of the handling, wherein the light signaling device (48) is configured in form of a line and extends at least partially parallel to a pressure beam (26) and/or at least partially orthogonally to the pressure beam (26).

## Revendications

1. Installation d'usinage de plaques (10), avec une table d'amenée (12), une table de prélèvement (14), un dispositif d'usinage disposé entre la table d'amenée (12) et la table de prélèvement (14), au moins un dispositif à signal lumineux (48), lequel est disposé à un emplacement visible par un opérateur et réalisé de sorte que la lumière en sortant peut parvenir directement aux yeux de l'opérateur, et un dispositif de commande (50) pour commander le dispositif à signal lumineux (48), dans laquelle l'installation d'usinage de plaques (10) comprend un dispositif de détection (40), lequel détecte au moins une propriété d'une pièce (52) et/ou d'une manipulation d'une pièce (52) par l'opérateur et est relié au dispositif de commande (50), lequel commande le dispositif à signal lumineux (48) en fonction de la propriété détectée de la pièce (52) et/ou de la propriété détectée de la manipulation, **caractérisée en ce que** le dispositif à signal lumineux (48) est réalisé de manière linéaire et s'étend au moins en partie parallèlement à une barre de pression (26) et/ou s'étend au moins en partie perpendiculairement à la barre de pression (26).

2. Installation d'usinage de plaques (10) selon la revendication 1, **caractérisée en ce que** la propriété de la pièce (52) est au moins une du groupe suivant : taille de la pièce (52), orientation de la pièce (52), position de la pièce (52), identificateur de la pièce (52), veines de la pièce (52), décoration de la pièce (52), direction de mouvement de la pièce (52), vitesse de mouvement de la pièce (52).

3. Installation d'usinage de plaques (10) selon la revendication 1, **caractérisée en ce que** la propriété de la manipulation est au moins une du groupe suivant : position de l'opérateur, position des mains de l'opérateur, direction de mouvement de l'opérateur, vitesse de mouvement de l'opérateur, direction de regard de l'opérateur.

4. Installation d'usinage de plaques (10) selon l'une quelconque des revendications précédentes, **caractérisée en ce que** le dispositif à signal lumineux (48) peut fonctionner au moins dans un mode d'éclairage, qui est un du groupe suivant et auquel est associée une information définie : le dispositif à signal lumineux (48) éclaire dans une couleur définie ou dans un motif défini, par exemple rayé ; le dispositif à signal lumineux (48) éclaire à un emplacement défini ; le dispositif à signal lumineux (48) éclaire de manière continue ; le dispositif à signal lumineux (48) éclaire à un rythme défini ; le dispositif à signal lumineux (48) clignote à une vitesse définie ; le dispositif à signal lumineux (48) change de couleur dans un ordre défini ; le dispositif à signal lumineux (48) change de rythme d'éclairage dans un ordre défini ; le dispositif à signal lumineux (48) change de lieu d'éclairage.

5. Installation d'usinage de plaques (10) selon la revendication 4, **caractérisée en ce que** l'information est au moins une du groupe suivant : un état réel de l'installation d'usinage de plaques (10), un état réel de la pièce (52), un état théorique de la pièce (52), un état théorique de l'opérateur, une différence entre un état réel et un état théorique de la pièce (52) et/ou de l'opérateur.

6. Installation d'usinage de plaques (10) selon la revendication 5, **caractérisée en ce que** l'information est au moins une du groupe suivant : la manipulation n'est pas correcte ; la manipulation est correcte ; la pièce (52) doit être amenée en rotation à partir de l'orientation actuelle ; la pièce (52) doit être déplacée à partir de la position actuelle à un emplacement défini ; l'opérateur doit se déplacer à partir de la position actuelle à un emplacement défini ; l'opérateur doit déplacer son corps et/ou ses mains à distance de la position actuelle ; la pièce (52) doit être éliminée ; la pièce (52) doit être désempilée ; la pièce (52) doit être entreposée ; la pièce (52) doit être placée à un emplacement défini ; un processus d'usinage est en cours ; un processus d'usinage est terminé ; la pièce (52) se trouve en ce moment à un emplacement défini ; la pièce (52) est orientée en ce moment d'une manière définie.

7. Installation d'usinage de plaques (10) selon l'une quelconque des revendications précédentes, **caractérisée en ce qu'**elle comprend en outre une règle angulaire (30) et/ou une table tampon (32) et/ou une zone de désempilage (56) et/ou une zone de stockage (64) et le dispositif à signal lumineux (48) est disposé sur la table de prélèvement (14) et/ou la règle linéaire (30) et/ou sur la table tampon (32) et/ou la zone de désempilage (56) et/ou la zone de stockage (64), de préférence est intégré dans la table de prélèvement (14) et/ou la règle angulaire (30) et/ou la table tampon et/ou la zone de désempilage et/ou la zone de stockage et/ou dans un sol sur lequel l'opérateur se déplace.

8. Installation d'usinage de plaques (10) selon l'une quelconque des revendications précédentes, **caractérisée en ce que** le dispositif à signal lumineux (48) comprend des DEL, qui sont disposées de préférence en au moins une rangée ou en plusieurs rangées.

9. Installation d'usinage de plaques (10) selon l'une quelconque des revendications précédentes, **caractérisée en ce que** le dispositif de détection comprend un dispositif de détection optique dirigé sur la zone de travail de l'opérateur, en particulier une caméra (40a).

10. Installation d'usinage de plaques (10) selon l'une quelconque des revendications précédentes, **caractérisée en ce que** le dispositif de détection comprend au moins un capteur inductif (40b) et/ou au moins un capteur ultrasonore (40c) et/ou au moins un capteur optique (40d).

11. Installation d'usinage de plaques (10) selon l'une quelconque des revendications précédentes, **caractérisée en ce que** le dispositif à signal lumineux (48) est commandé de sorte qu'aussi bien une instruction pour la manipulation de la pièce qu'une instruction pour un mouvement de l'opérateur nécessaire à cela est délivrée.

12. Procédé pour la division d'au moins une pièce (52) avec une installation d'usinage de plaques (10) selon l'une quelconque des revendications précédentes comprenant :
- la détection d'au moins une propriété de l'au moins une pièce (52) et/ou d'une manipulation de l'au moins une pièce (52) par l'opérateur avant un processus de division, pendant un processus de division et/ou après un processus de division, et
- la commande d'un dispositif à signal lumineux (48), lequel est disposé sur l'installation d'usinage de plaques (10) à un emplacement visible par un opérateur, en fonction de la propriété détectée de l'au moins une pièce (52) et/ou de la manipulation, dans lequel le dispositif à signal lumineux (48) est réalisé de manière linéaire et s'étend au moins en partie parallèlement à une barre de pression (26) et/ou s'étend au moins en partie perpendiculairement à la barre de pression (26) .
